# EUROPÄISCHE PATENTSCHRIFT

(11) **EP 3 058 611 B1**
(45) Veröffentlichungstag und Bekanntmachung des Hinweises auf die Patenterteilung: **21.06.2017**
(21) Anmeldenummer: 14761844.1
(22) Anmeldetag: 09.09.2014
(51) Int. Cl.: H01M 4/134, H01M 4/1395, H01M 4/36, H01M 4/38, H01M 4/04, H01M 10/052, H01M 4/02

(54) **LITHIUM-ELEKTRODE FÜR EINEN LITHIUM-IONEN-AKKUMULATOR UND VERFAHREN ZU IHRER HERSTELLUNG**
LITHIUM ELECTRODE FOR A LITHIUM-ION BATTERY, AND METHOD FOR THE PRODUCTION THEREOF
ÉLECTRODE AU LITHIUM POUR ACCUMULATEUR LITHIUM-IONS ET SON PROCÉDÉ DE FABRICATION

(30) Priorität: 15.10.2013 DE 102013220785
(43) Veröffentlichungstag der Anmeldung: 24.08.2016
(73) Patentinhaber: Robert Bosch GmbH, 70442 Stuttgart (DE)
(72) Erfinder: FANOUS, Jean, 70374 Stuttgart (DE); TENZER, Martin, 72622 Nuertingen (DE)
(86) Internationale Anmeldenummer: PCT/EP2014/069167
(87) Internationale Veröffentlichungsnummer: WO 2015/055351

(56) Entgegenhaltungen:
- WO-A1-2013/146792
- JP-A- 2011 238 404
- US-A1- 2013 059 193

## Beschreibung

Die vorliegende Erfindung betrifft eine Lithium-Elektrode. Weiterhin betrifft sie einen Lithium-Ionen-Akkumulator, der die erfindungsgemäße Lithium-Elektrode al Anode umfasst. Schließlich betrifft sie ein Verfahren zur Herstellung der Lithium-Elektrode.

### Stand der Technik

Bekannt sind Akkumulatoren des sogenannten "rocking-chair"-Typs, bei denen als Anodenmaterial ein Kohlenstoffmaterial, beispielsweise Graphit, verwendet wird, welches bei der Durchführung der Ladung zum Interkalieren (Einlagern) von Lithium-Ionen an den Einlagerungsstellen seiner durch Kohlenstoffatome in Form von sechsgliedrigen Ringen gebildeten Gitterebenen befähigt ist. Als aktives Kathodenmaterial wird typischerweise ein Lithium-Einlagerungs- bzw. Interkalationsmaterial wie LiCoO₂, LiNiO₂ oder LiMn₂O₄ verwendet, die während der Ladung zum Deinterkalieren (Auslagern) der Lithium-Ionen aus ihren Einlagerungsstellen befähigt ist, sodass Lithium-Ionen zwischen den Einlagerungselektroden während der Lade-/Entladezyklen hin und her wandern.

Bei verschiedenen Arten von Lithium-Batterien, insbesondere den sogenannten Post-Lithium-Ionen-Batterien, wie beispielsweise Li-Schwefel oder Li-Sauerstoff, wird als Anode eine metallische Lithiumanode verwendet. Bei dieser tritt das Problem ungleichmäßiger Lithiumabscheidung auf, sodass nach wiederholten Auflöse- und Abscheidevorgängen von Lithiummetall die Porosität sowie das Volumen der gesamten Lithiumanode beständig zunehmen. Dies vergrößert die interne Oberfläche, an der parasitäre Nebenreaktionen mit dem Elektrolyten stattfinden.

Zur Verhinderung dieser Effekte wird die Lithiumanode üblicherweise mit einer Lithium-Ionen-leitenden Schutzschicht überzogen (z.B. Polymerionenleiter, Festkörperionenleiter), die den Kontakt zwischen Lithium und Elektrolyt verhindert. Aufgrund der Volumenbewegungen in der Lithiumanode infolge des Auflösens und Wiederabscheidens von Lithium muss sich auch die Schutzschicht ständig mit der Lithiumoberfläche mitbewegen. Aus experimentellen Untersuchungen ist bekannt, dass keines der derzeit bekannten ionenleitenden Materialien als Schutzschicht diese Volumenbewegungen über zahlreiche Lade-/Entladezyklen hinweg aushält. Vielmehr entstehen Brüche und Risse, was die Funktion der Schutzschicht maßgeblich beeinträchtigt. Solange dieses Problem bestehen bleibt, kann auch eine sehr gut ionenleitende Schutzschicht keinen dauerhaften Schutz der Lithiumanode vor dem Elektrolyt bieten.

In D1 ist eine Aktivmaterialschicht einer negativen Elektrode offenbart, welche durch eine erste Schicht geschützt wird, die lithiumionenleitfähig ausgebildet ist. Zwischen der Aktivmaterialschicht der negativen Elektrode und der ersten Schicht ist eine weiteren Schicht vorgesehen, welche ebenfalls lithiumionenleitfähig ausgebildet ist.

In D2 ist ein Hybrid-Kondensator beschrieben, umfassend eine positive Elektrode und eine negative Elektrode in Form einer Lithiumverbundelektrode. Die Lithiumverbundelektrode umfasst einen Lithiumionen leitenden Festkörperelektrolyten, einen Polymerelektrolyten und eine Aktivmaterialschicht mit Lithium.

D3 beschreibt eine elektrochemische Zelle, welche zumindest eine Stickstoff enthaltende Komponente umfasst. Die Stickstoff enthaltende Komponente kann Teil einer Anodenstruktur, einer Kathodenstruktur, eines Elektrolyten und/oder eines Separators sein.

### Offenbarung der Erfindung

Die erfindungsgemäße Lithium-Elektrode umfasst eine erste Lithiumschicht, einen auf einer ersten Seite der ersten Lithiumschicht angeordneten Stromableiter und eine auf einer zweiten, der ersten Seite gegenüberliegenden, Seite der ersten Lithiumschicht angeordnete Lithium-Ionen-leitende Schutzschicht. Zwischen der ersten Lithiumschicht und der Schutzschicht ist eine Zwischenschicht angeordnet, welche die zweite Seite der ersten Lithiumschicht vollständig bedeckt. Sowohl die Schutzschicht als auch die Zwischenschicht weisen jeweils eine elektrische Leitfähigkeit von weniger als 10-10 S/cm auf, d.h. es handelt sich um elektrische Nichtleiter. Die Zwischenschicht fungiert als stabilisierende Stützmatrix an der Oberfläche der Lithiumschicht. Diese Matrix hat die Aufgabe, die auf dem Lithium aufgebrachte Schutzschicht mechanisch so zu unterstützen, dass infolge von Volumenbewegungen der ersten Lithiumschicht keine Spannungen auf die spröde Schutzschicht übertragen werden. Hierzu ist es bevorzugt, dass die Zwischenschicht nicht aus einem durchgehend soliden Material besteht, sondern Poren und/oder Öffnungen aufweist. Besonders bevorzugt bestehen mindestens Volumenprozent der Zwischenschicht aus Poren und/oder Öffnungen. Weiterhin ist es besonders bevorzugt, dass die Zwischenschicht durchgehende Öffnungen zwischen der ersten Lithiumschicht und der Schutzschicht aufweist. Diese Öffnungen können mit Lithium gefüllt werden, um einen ausreichenden Kontakt zwischen der ersten Lithiumschicht und der Schutzschicht herzustellen. Hierzu ist es ganz besonders bevorzugt, dass die durchgehenden Öffnungen einen Durchmesser im Bereich von 10 µm bis 1000 µm aufweisen.

Es ist bevorzugt, dass die Zwischenschicht aus einem Lithium-Ionen-leitenden Material besteht. Weist die Zwischenschicht keine durchgehenden Öffnungen auf, so ist es notwendig, dass sie aus einem Lithium-Ionen-leitenden Material besteht, um den Transport von Lithium-Ionen zwischen der ersten Lithiumschicht und der Schutzschicht zu ermöglichen. Auch wenn durchgehende Öffnungen vorhanden sind, ist es vorteilhaft, dass die Zwischenschicht aus einem Lithium-Ionen-leitenden Material besteht, um den Lithiumtransport weiter zu erleichtern.

Die Zwischenschicht besteht vorzugsweise aus einem Material, das ausgewählt ist aus der Gruppe bestehend aus Polymeren, Keramiken und Gemischen daraus. Bevorzugte Polymere sind dreidimensional vernetzte Polymere, d.h. Duromere, insbesondere vernetzte Polyacrylate und vernetzte Epoxidharze. Weitere bevorzugte Polymere sind thermoplastische Polymere. Hierunter sind Polyolefine bevorzugt, wobei Polyethylen, Polypropylen und Polystyrol besonders bevorzugt sind. Weiterhin sind Polycarbonate, Polyethylenoxid und Polyester wie insbesondere Polyethylenterephthalat (PET), bevorzugt. Derartige Polymere ermöglichen eine sehr flexible Formgebung der Zwischenschicht, beispielsweise mit definierten strukturierten Öffnungen. Auch eine gewebeähnliche Struktur der Zwischenschicht kann so realisiert werden, indem beispielsweise zunächst eine zweidimensionale Polymerisation, anschließend ein mechanisches Verstrecken und schließlich eine dreidimensionale Polykondensation durch Vernetzung erfolgt. Weiterhin weisen derartige Polymere ein geringes Gewicht auf, was den Vorteil hat, dass die spezifische Energie einer elektrochemischen Zelle, in der die Lithium-Elektrode angeordnet ist, durch die Zwischenschicht nicht beeinträchtigt wird. Schließlich sind derartige Polymere elektrisch gut isolierend.

Bevorzugte Keramiken sind Metalloxide, insbesondere Aluminiumoxid. Weiterhin sind Lithium-Ionen-leitende Keramiken, wie insbesondere LiPON und LiLaZr-Oxid bevorzugt. Derartige Keramiken sind mechanisch sehr stabil und durch Druck wenig deformierbar. Sie können durch Sintern porös hergestellt werden, sodass Öffnungen für das Einbringen von Lithium geschaffen werden. Schließlich sind derartige Keramiken elektrisch gute Isolatoren und üblicherweise chemisch sehr stabil, sodass sie sich in einer elektrochemischen Zelle inert verhalten. Mischungen aus Polymeren und Keramiken können in einem beliebigen Verhältnis als Zwischenschicht verwendet werden. Hierdurch lassen sich die Vorteile von Polymeren und Keramiken kombinieren.

Die Zwischenschicht weist bevorzugt eine Dicke im Bereich von 0,1 µm bis 100 µm auf, besonders bevorzugt im Bereich von 1 µm bis 20 µm.

Die Schutzschicht besteht insbesondere aus einem Material, das gegenüber Lithium chemisch stabil ist.

Der erfindungsgemäße Lithium-Ionen-Akkumulator umfasst eine Lithium-Elektrode gemäß der Erfindung als Anode. Der Lithium-Ionen-Akkumulator enthält insbesondere einen flüssigen Elektrolyten, für den die Schutzschicht der erfindungsgemäßen Lithium-Elektrode undurchlässig ist.

In dem erfindungsgemäßen Verfahren zur Herstellung einer Lithium-Elektrode, insbesondere einer erfindungsgemäßen Lithium-Elektrode, wird eine erste Lithiumschicht auf einen Stromableiter aufgebracht. Eine Zwischenschicht mit einer elektrischen Leitfähigkeit von weniger als 10⁻¹⁰ S/cm wird so auf die erste Lithiumschicht aufgebracht, dass die Zwischenschicht die erste Lithiumschicht vollständig bedeckt. Hierzu kann die Zwischenschicht auch über die Ränder der ersten Lithiumschicht überstehen. Eine Lithium-Ionen-leitende Schutzschicht mit einer elektrischen Leitfähigkeit von weniger als 10⁻¹⁰ S/cm² wird auf die Zwischenschicht aufgebracht.

Um eine Lithium-Ionen-leitende Verbindung zwischen der ersten Lithiumschicht und der Schutzschicht herzustellen, ist es bevorzugt, dass die Zwischenschicht durchgehende Öffnungen zwischen der ersten Lithiumschicht und der Schutzschicht aufweist. Die Zwischenschicht wird dann vorzugsweise so in die erste Lithiumschicht eingepresst, dass die durchgehenden Öffnungen mit Lithium gefüllt werden.

Es ist bevorzugt, dass auf die Zwischenschicht nach ihrem Aufbringen auf die erste Lithiumschicht und vor dem Aufbringen der Schutzschicht eine zweite Lithiumschicht aufgebracht wird. Dies kann insbesondere durch Bedampfen mit Lithium erfolgen. Hierdurch wird die Oberfläche der Zwischenschicht geglättet. Dadurch muss die erste Lithiumschicht nur geringe Anforderungen an ihre Oberflächenrauigkeit erfüllen, sodass beispielsweise eine Lithiumfolie als erste Lithiumschicht verwendet werden kann. Nach dem Aufbringen der Schutzschicht kann die zweite Lithiumschicht elektrochemisch entfernt werden. Hierzu wird die Lithium-Elektrode als Anode elektrochemisch mit einem Separator, einem Elektrolyt und einer Gegenelektrode kontaktiert. Soll die Lithium-Elektrode in einem Lithium-Ionen-Akkumulator verwendet werden, so kann es sich bei der Gegenelektrode um diejenige Kathode handeln, die auch im späteren Betrieb des Lithium-lonen-Akkumulators verwendet werden soll. Es kann aber auch eine andere Gegenelektrode nur zum Zweck des elektrochemischen Entfernens der zweiten Lithiumschicht verwendet und danach wieder entfernt werden. Anschließend wird solange Lithium aus der zweiten Lithiumschicht der Lithium-Elektrode entladen, bis eine formschlüssige Verbindung zwischen der Schutzschicht und der Zwischenschicht entsteht. Dann kann die Zwischenschicht als stützende Struktur unter der Schutzschicht dienen, um bei Volumenbewegungen in einer elektrochemischen Zelle, in der die Lithiumelektrode angeordnet ist, alle mechanischen Spannungen aufzunehmen, sodass diese nicht zur Beschädigung der Schutzschicht führen können. Da sowohl die Schutzschicht als auch die Zwischenschicht erfindungsgemäß elektrisch isolierend sind, können sich Lithium-Ionen nicht mehr zwischen diesen beiden Schichten ablagern, sodass die direkte Verbindung beider Schichten stets bestehen bleibt.

### Kurze Beschreibung der Zeichnungen

Ausführungsbeispiele der Erfindung werden in den folgenden Zeichnungen dargestellt und in der nachfolgenden Beschreibung näher erläutert.
**Fig. 1** zeigt eine Querschnittdarstellung eines Lithium-Ionen-Akkumulators gemäß dem Stand der Technik.
**Fig. 2** zeigt eine Querschnittdarstellung der Anode eines Lithium-Ionen-Akkumulators gemäß dem Stand der Technik.
**Fig. 3a** zeigt einen ersten Schritt der Herstellung einer Lithium-Elektrode gemäß einer Ausführungsform der Erfindung.
**Fig. 3b** zeigt einen zweiten Schritt einer Herstellung einer Lithium-Elektrode gemäß einer Ausführungsform der Erfindung.
**Fig. 3c** zeigt einen dritten Schritt einer Herstellung einer Lithium-Elektrode gemäß einer Ausführungsform der Erfindung.
**Fig. 3d** zeigt einen vierten Schritt einer Herstellung einer Lithium-Elektrode gemäß einer Ausführungsform der Erfindung.
**Fig. 3e** zeigt eine Querschnittdarstellung einer fertigen Lithium-Elektrode gemäß einer Ausführungsform der Erfindung.
**Fig. 4a** zeigt einen ersten Schritt einer Herstellung einer Lithium-Elektrode gemäß einer anderen Ausführungsform der Erfindung.
**Fig. 4b** zeigt einen zweiten Schritt einer Herstellung einer Lithium-Elektrode gemäß einer anderen Ausführungsform der Erfindung.
**Fig. 4c** zeigt einen dritten Schritt einer Herstellung einer Lithium-Elektrode gemäß einer anderen Ausführungsform der Erfindung.
**Fig. 4d** zeigt einen vierten Schritt einer Herstellung einer Lithium-Elektrode gemäß einer anderen Ausführungsform der Erfindung.
**Fig. 4e** zeigt eine Querschnittdarstellung einer fertigen Lithium-Elektrode gemäß einer anderen Ausführungsform der Erfindung.

### Ausführungsbeispiele der Erfindung

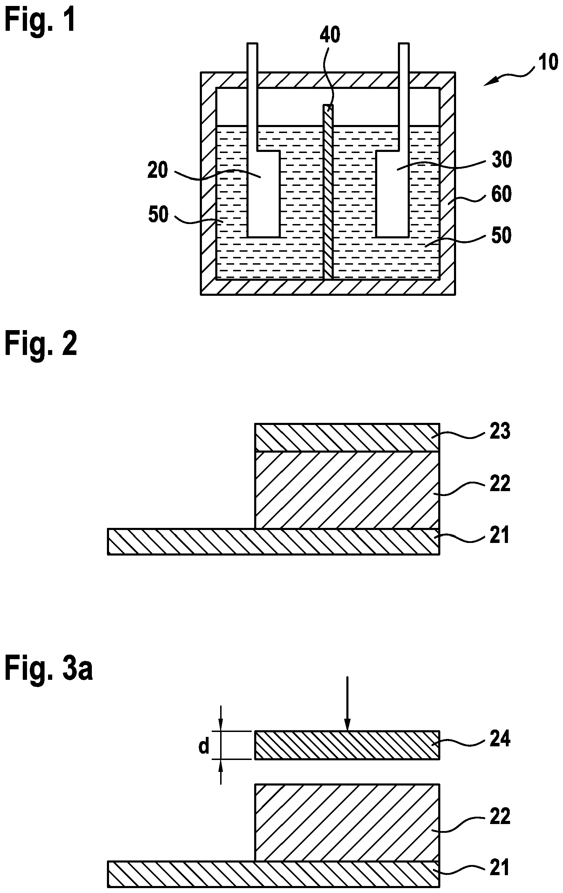

Eine schematische Querschnittdarstellung eines herkömmlichen Lithium-Ionen-Akkumulators 10 ist in **Fig. 1** gezeigt. Eine Anode 20 umfasst aktives Anodenmaterial und einen Anodenableiter. Eine Kathode 30 umfasst aktives Kathodenmaterial und einen Kathodenableiter. Ein Separator 40 verhindert ein Auftreten interner Kurzschlüsse zwischen den Elektroden 20, 30, indem er die beiden Elektroden 20, 30 voneinander beabstandet und elektrisch voneinander isoliert. Zwischen den beiden Elektroden 20, 30 ist ein flüssiger Elektrolyt 50 angeordnet. Dieser umfasst typischerweise ein Lösungsmittel und ein lithiumhaltiges Salz. Die beiden Elektroden 20, 30, der Separator 40 und der Elektrolyt 50 sind gemeinsam in einem Gehäuse 60 angeordnet. Die Ableitung der Anode 20 und die Ableitung der Kathode 30 durchdringen jeweils das Gehäuse 60 und ermöglichen somit die elektrische Kontaktierung der Anode 20 und der Kathode 30. **Fig. 2** ist eine Detailansicht der Anode des Lithium-Ionen-Akkumulators gemäß Fig. 1. Diese besteht aus einem Anodenableiter 21, einer Lithiumschicht 22 und einer Schutzschicht 23. Die Schutzschicht 23 besteht aus einem elektrisch isolierenden und Lithium-Ionen-leitfähigen Material. Die Schutzschicht 23 verhindert den Kontakt zwischen der Lithiumschicht 22 und dem Elektrolyt 50. Im Betrieb des Lithium-lonen-Akkumulators 10 muss sich die Schutzschicht 23 infolge des Auflösens und Wiederabscheidens von Lithium an der Lithiumschicht 22 ständig mit der Oberfläche der Lithiumschicht 22 mitbewegen. Hierdurch kommt es zu Brüchen und Rissen in der Schutzschicht 23.

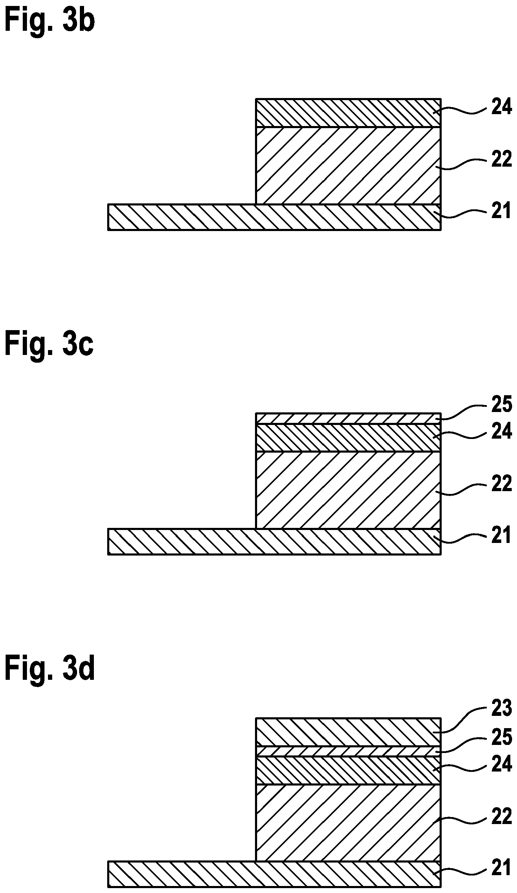

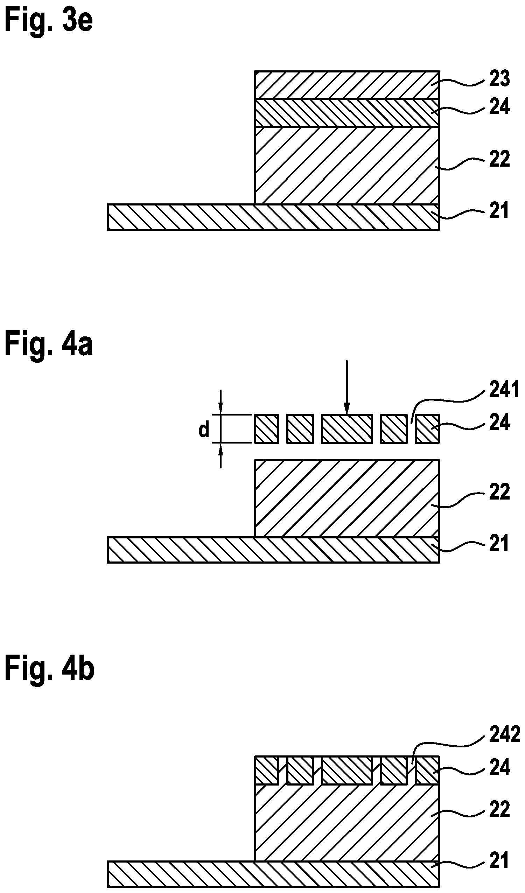

In den **Fig. 3a** bis **3e** ist dargestellt, wie eine Lithium-Elektrode gemäß einer ersten Ausführungsform der Erfindung hergestellt werden kann. Zunächst wird ein Elektrodenableiter 21 aus Kupfer bereitgestellt, auf dessen Oberfläche eine Lithiumfolie als erste Lithiumschicht 22 bereitgestellt wird. Ein gesintertes Plättchen aus LiPON mit einer Dicke d von 10 µm wird ebenfalls bereitgestellt. Dieses ist offenporig, doch ohne durchgehende Öffnungen gesintert. Es wird mechanisch in die erste Lithiumschicht 22 eingepresst und so auf deren Oberfläche als Zwischenschicht 24 aufgebracht. Da es keine durchgehenden Öffnungen aufweist, entstehen hierbei keine durchgehenden Lithiumverbindungen durch die Zwischenschicht 24. Die Möglichkeit eines Lithium-lonen-Transportes durch die Zwischenschicht 24 wird vielmehr durch die Lithium-Ionen-Leitfähigkeit des Materials LiPON gewährleistet. Zur Glättung der Oberfläche der Zwischenschicht 24 wird diese mit einer zweiten Lithiumschicht 25 bedampft, deren Dicke geringer ist als die Dicke d der Zwischenschicht 24. Auf die zweite Lithiumschicht 25 wird eine Schutzschicht 23 aus z.B. ionenleitendem Lithium-Lanthan-Zirkon-Oxid abgeschieden. Anschließend wird die Lithium-Elektrode als Anode 20 in dem Lithium-Ionen-Akkumulator 10 gemäß Fig. 1 angeordnet. Dort wird solange Lithium aus der zweiten Lithiumschicht 25 der Lithium-Elektrode entfernt, bis eine formschlüssige Verbindung zwischen der Schutzschicht 23 und der Zwischenschicht 24 hergestellt ist.

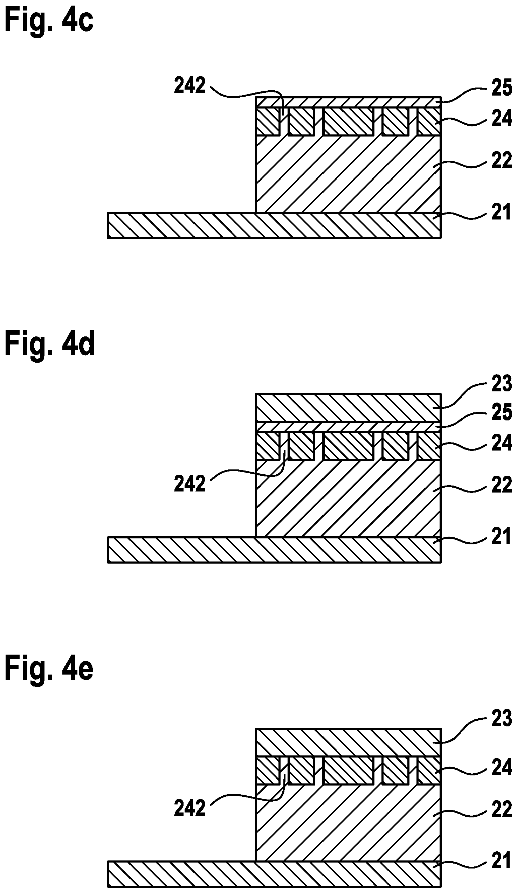

Die Herstellung einer Lithium-Elektrode gemäß einer zweiten Ausführungsform ist in den **Fig. 4a** bis **4e** dargestellt. Zunächst wird wie in der ersten Ausführungsform der erfindungsgemäßen Lithium-Elektrode ein kupferner Elektrodenableiter 21 bereitgestellt, der auf seiner Oberfläche eine 10 µm dicke Lithiumfolie 22 aufweist. Weiterhin wird ein gewebeähnliches Flächengebilde aus einem vernetzten Polyacrylat bereitgestellt. Dieses weist in seiner gewebeähnlichen Struktur durchgehende Öffnungen 241 auf. Anschließend wird das gewebeartige Flächengebilde mechanisch so in die erste Lithiumschicht 22 eingepresst, dass die Oberkante des gewebeartigen Flächengebildes und die Oberkante der Lithiumfolie 22 auf derselben Höhe liegen. Hierbei dringt Lithium 242 aus der ersten Lithiumschicht 22 in die durchgehenden Öffnungen 241 ein und stellt so durchgehende Lithiumkanäle zwischen der ersten Lithiumschicht 22 und der der ersten Lithiumschicht 22 abgewandten Seite der Zwischenschicht 24 her. Wie in der ersten Ausführungsform der erfindungsgemäßen Lithiumelektrode wird nun die Oberfläche der Zwischenschicht 24 mit einer zweiten Lithiumschicht 25 bedampft und eine Schutzschicht 23 auf der zweiten Lithiumschicht 25 abgeschieden. Anschließend kann auch diese Lithium-Elektrode in dem Lithium-Ionen-Akkumulator gemäß Fig. 1 als Anode 20 angeordnet werden und solange Lithium aus der zweiten Lithiumschicht 25 abgeschieden werden, bis eine formschlüssige Verbindung zwischen der Schutzschicht 23 und der Zwischenschicht 24 hergestellt ist. Der Transport von Lithium-Ionen durch die Zwischenschicht 24 erfolgt in dieser Ausführungsform der Erfindung nicht aufgrund einer Lithium-Ionen-Leitfähigkeit des Materials der Zwischenschicht 24, sondern vielmehr durch die Lithiumkanäle 242 in den Öffnungen 241 der Zwischenschicht 24.

Ein Lithium-Ionen-Akkumulator 10, der als Anode 20 eine Lithium-Elektrode gemäß einer der voranstehend beschriebenen Ausführungsformen der Erfindung aufweist, hat bei seiner Verwendung als primäre oder sekundäre Lithiumbatterie eine höhere Lebensdauer als ein Lithium-Ionen-Akkumulator 10, der als Anode 20 eine herkömmliche Lithium-Anode gemäß Fig. 2 aufweist. Dies gilt unabhängig davon, ob als Kathode 30 eine klassische oder eine neuartige Kathode verwendet wird. Ein derartiger Lithium-Ionen-Akkumulator 10 kann beispielsweise in Elektrowerkzeugen, Gartengeräten, Computern, Notebooks, PDAs und Mobiltelefonen, in Hybrid- und Plug-in-Hybrid- sowie in Elektrofahrzeugen eingesetzt werden. Aufgrund der besonders hohen Anforderungen an die Lebensdauer von Akkumulatoren in Automobil-Anwendungen ist er in besonderem Maße für Hybrid-, Plug-in-Hybrid- und Elektrofahrzeuge geeignet.

## Patentansprüche

1. Lithium-Elektrode, umfassend eine erste Lithiumschicht (22), die aus Lithium oder einer Lithiumlegierung besteht, einen auf einer ersten Seite der ersten Lithiumschicht angeordneten Stromableiter (21) und eine auf einer zweiten, der ersten Seite gegenüberliegenden, Seite der ersten Lithiumschicht angeordnete Lithium-Ionen-leitende Schutzschicht (23), wobei zwischen der ersten Lithiumschicht (22) und der Schutzschicht (23) eine Zwischenschicht (24) angeordnet ist, welche die zweite Seite der ersten Lithiumschicht (22) vollständig bedeckt, **dadurch gekennzeichnet, dass** sowohl die Schutzschicht (23) als auch die Zwischenschicht (24) jeweils eine elektrische Leitfähigkeit von weniger als 10⁻¹⁰ S/cm aufweisen.

2. Lithium-Elektrode nach Anspruch 1, **dadurch gekennzeichnet, dass** die Zwischenschicht (24) Poren und/oder Öffnungen aufweist.

3. Lithium-Elektrode nach Anspruch 2, **dadurch gekennzeichnet, dass** mindestens 10 Vol.-% der Zwischenschicht (24) aus Poren und/oder Öffnungen bestehen.

4. Lithium-Elektrode nach Anspruch 2 oder 3, **dadurch gekennzeichnet, dass** die Zwischenschicht (24) durchgehende Öffnungen (241) zwischen der ersten Lithiumschicht (22) und der Schutzschicht (23) aufweist, die mit Lithium (242) gefüllt sind.

5. Lithium-Elektrode nach Anspruch 4, **dadurch gekennzeichnet, dass** die durchgehenden Öffnungen (241) einen Durchmesser im Bereich von 10 µm bis 1000 µm aufweisen.

6. Lithium-Elektrode nach einem der Ansprüche 1 bis 5, **dadurch gekennzeichnet, dass** die Zwischenschicht (24) aus einem Lithium-Ionen-leitenden Material besteht.

7. Lithium-Elektrode nach einem der Ansprüche 1 bis 6, **dadurch gekennzeichnet, dass** die Zwischenschicht (24) aus einem Material besteht, das ausgewählt ist aus der Gruppe, bestehend aus Polymeren, Keramiken und Gemischen daraus.

8. Lithium-Elektrode nach einem der Ansprüche 1 bis 7, **dadurch gekennzeichnet, dass** die Zwischenschicht (24) eine Dicke d im Bereich von 0,1 µm bis 100 µm aufweist.

9. Lithium-Ionen-Akkumulator (10), umfassend eine Lithium-Elektrode nach einem der Ansprüche 1 bis 8 als Anode (20).

10. Verfahren zur Herstellung einer Lithium-Elektrode, umfassend
- Aufbringen einer ersten Lithiumschicht (22), die aus Lithium oder einer Lithiumlegierung besteht, auf einen Stromableiter (21),
- Aufbringen einer Zwischenschicht (24) mit einer elektrischen Leitfähigkeit von weniger als 10⁻¹⁰ S/cm auf die erste Lithiumschicht (22), so dass die Zwischenschicht (24) die erste Lithiumschicht (22) vollständig bedeckt, und
- Aufbringen einer Lithium-Ionen-leitenden Schutzschicht (23) mit einer elektrischen Leitfähigkeit von weniger als 10⁻¹⁰ S/cm auf die Zwischenschicht (24).

11. Verfahren nach Anspruch 10, **dadurch gekennzeichnet, dass** die Zwischenschicht (24) durchgehende Öffnungen (241) zwischen der ersten Lithiumschicht (22) und der Schutzschicht (23) aufweist, und dass die Zwischenschicht (24) so in die erste Lithiumschicht (22) eingepresst wird, dass die durchgehenden Öffnungen (241) mit Lithium (242) gefüllt werden.

12. Verfahren nach Anspruch 10 oder 11, **dadurch gekennzeichnet, dass** auf die Zwischenschicht (24) nach ihrem Aufbringen auf die erste Lithiumschicht (22) und vor dem Aufbringen der Schutzschicht (23) eine zweite Lithiumschicht (25) aufgebracht wird, die aus Lithium besteht, und dass die zweite Lithiumschicht (25) nach dem Aufbringen der Schutzschicht (24) elektrochemisch entfernt wird.

## Claims

1. Lithium electrode, comprising a first lithium layer (22), which consists of lithium or a lithium alloy, a current collector (21) arranged on a first side of the first lithium layer and a lithium-ion-conducting protective layer (23) arranged on a second side of the first lithium layer, opposite from the first side, there being arranged between the first lithium layer (22) and the protective layer (23) an intermediate layer (24), which completely covers the second side of the first lithium layer (22), **characterized in that** both the protective layer (23) and the intermediate layer (24) each have an electrical conductivity of less than 10⁻¹⁰ S/cm.

2. Lithium electrode according to Claim 1, **characterized in that** the intermediate layer (24) has pores and/or openings.

3. Lithium electrode according to Claim 2, **characterized in that** at least 10% by volume of the intermediate layer (24) consists of pores and/or openings.

4. Lithium electrode according to Claim 2 or 3, **characterized in that** the intermediate layer (24) has through-openings (241), which are filled with lithium (242), between the first lithium layer (22) and the protective layer (23).

5. Lithium electrode according to Claim 4, **characterized in that** the through-openings (241) have a diameter in the range of 10 µm to 1000 µm.

6. Lithium electrode according to one of Claims 1 to 5, **characterized in that** the intermediate layer (24) consists of a lithium-ion-conducting material.

7. Lithium electrode according to one of Claims 1 to 6, **characterized in that** the intermediate layer (24) consists of a material which is selected from the group consisting of polymers, ceramics and mixtures thereof.

8. Lithium electrode according to one of Claims 1 to 7, **characterized in that** the intermediate layer (24) has a thickness d in the range of 0.1 µm to 100 µm.

9. Rechargeable lithium-ion battery (10), comprising a lithium electrode according to one of Claims 1 to 8 as an anode (20).

10. Method for producing a lithium electrode, comprising
- applying a first lithium layer (22), which consists of lithium or a lithium alloy, to a current collector (21),
- applying an intermediate layer (24) having an electrical conductivity of less than 10⁻¹⁰ S/cm to the first lithium layer (22), so that the intermediate layer (24) completely covers the first lithium layer (22), and
- applying a lithium-ion-conducting protective layer (23) having an electrical conductivity of less than 10⁻¹⁰ S/cm to the intermediate layer (24).

11. Method according to Claim 10, **characterized in that** the intermediate layer (24) has through-openings (241) between the first lithium layer (22) and the protective layer (23), and **in that** the intermediate layer (24) is pressed into the first lithium layer (22) in such a way that the through-openings (241) are filled with lithium (242).

12. Method according to Claim 10 or 11, **characterized in that** a second lithium layer (25), which consists of lithium, is applied to the intermediate layer (24) after the same has been applied to the first lithium layer (22) and before the protective layer (23) is applied, and **in that** the second lithium layer (25) is electrochemically removed after the protective layer (24) has been applied.

## Revendications

1. Electrode au lithium comprenant une première couche (22) de lithium constituée de lithium ou d'un alliage de lithium, un évacuateur de courant (21) disposé sur un premier côté de la première couche de lithium et une couche de protection (23) conduisant les ions lithium et disposée sur un deuxième côté, opposé au premier côté, de la première couche de lithium,
une couche intermédiaire (24) qui couvre complètement le deuxième côté de la première couche de lithium (22) étant disposée entre la première couche de lithium (22) et la couche de protection (23), **caractérisée en ce que**
la couche de protection (23) et la couche intermédiaire (24) ont toutes deux une conductivité électrique inférieure à 10⁻¹⁰ S/cm.

2. Electrode au lithium selon la revendication 1, **caractérisée en ce que** la couche intermédiaire (24) présente des pores et/ou des ouvertures.

3. Electrode au lithium selon la revendication 2, **caractérisée en ce qu'**au moins 10 % en volume de la couche intermédiaire (24) sont constitués de pores et/ou d'ouvertures.

4. Electrode au lithium selon la revendication selon les revendications 2 ou 3, **caractérisée en ce que** la couche intermédiaire (24) présente entre la première couche de lithium (22) et la couche de protection (23) des ouvertures continues remplies de lithium (242).

5. Electrode au lithium selon la revendication 4, **caractérisée en ce que** les ouvertures continues (241) ont un diamètre compris dans la plage de 10 µm à 1 000 µm.

6. Electrode au lithium selon l'une des revendications 1 à 5, **caractérisée en ce que** la couche intermédiaire (24) est constituée d'un matériau conduisant les ions lithium.

7. Electrode au lithium selon l'une des revendications 1 à 6, **caractérisée en ce que** la couche intermédiaire (24) est constituée d'un matériau sélectionné dans l'ensemble constitué des polymères, des céramiques et de leurs mélanges.

8. Electrode au lithium selon l'une des revendications 1 à 7, **caractérisée en ce que** la couche intermédiaire (24) présente une épaisseur d comprise dans la plage de 0,1 µm à 100 µm.

9. Accumulateur (10) à ions lithium comprenant comme anode (20) une électrode au lithium selon l'une des revendications 1 à 8.

10. Procédé de fabrication d'une électrode au lithium comprenant les étapes qui consistent à :
appliquer sur un évacuateur de courant (21) une première couche de lithium (22) constituée de lithium ou d'un alliage de lithium,
appliquer sur la première couche de lithium (22) une couche intermédiaire (24) dont la conductivité électrique est inférieure à 10⁻¹⁰ S/cm, de telle sorte que la couche intermédiaire (24) recouvre complètement la première couche de lithium (22) et
appliquer sur la couche intermédiaire (24) une couche de protection (23) conduisant des ions lithium et dont la conductivité électrique est inférieure à 10⁻¹⁰ S/cm.

11. Procédé selon la revendication 10, **caractérisé en ce que** la couche intermédiaire (24) présente des ouvertures (241) continues entre la première couche de lithium (22) et la couche de protection (23) et **en ce que** la couche intermédiaire (24) est enfoncée dans la première couche de lithium (22) de telle sorte que les ouvertures continues (241) soient remplies de lithium (242) .

12. Procédé selon les revendications 10 ou 11, **caractérisé en ce qu'**une deuxième couche de lithium (25) constituée de lithium est appliquée sur la couche intermédiaire (24) après que celle-ci a été appliquée sur la première couche de lithium (22) et avant l'application de la couche de protection (23), et **en ce que** la couche de lithium (25) est enlevée électrochimiquement après l'application de la couche de protection (24).
